# FASCICULE DE BREVET EUROPEEN

(11) **EP 0 720 282 B1**
(45) Date de publication et mention de la délivrance du brevet: **30.09.1998**
(21) Numéro de dépôt: 95402963.3
(22) Date de dépôt: 28.12.1995
(51) Int. Cl.: H02M 7/48

(54) **Dispositif électronique de conversion de l'énergie électrique et installation d'alimentation en faisant usage**
Elektronische Vorrichtung zur elektrischen Energieumwandlung und dieselbe verwendende Leistungsversorgungsanlage
Electronic device for electric energy conversion and power supply installation using the same

(30) Priorité: 29.12.1994 FR 9415866
(43) Date de publication de la demande: 03.07.1996
(73) Titulaire: GEC ALSTHOM TRANSPORT SA, 75016 Paris (FR)
(72) Inventeur: Lavieville, Jean-Paul, F-91190 Gif sur Yvette (FR); Gonzalez, Juan, F-78730 St. Arboult en Yvelines (FR)
(74) Mandataire: Fournier, Michel

(56) Documents cités:
- FR-A- 2 679 715

## Description

La présente invention concerne les dispositifs électroniques de conversion de l'énergie électrique du type décrit dans la demande de brevet FR - 2 679 715 A1 et une installation d'alimentation en faisant usage.

Le convertisseur décrit dans cette demande de brevet est illustré, à titre d'exemple, par la figure 1 ci-annexée. Il comprend essentiellement, entre une source de tension SE et une source de courant C, une pluralité de cellules de commutation commandables CL1, CL2..., CLn, chacune ayant deux interrupteurs T1, T'1; T2, T'2...; Tn, T'n, avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn est connectée à ladite source de tension SE, ce convertisseur comprenant encore un condensateur C1, C2..., Cn, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lc1), de sorte que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte que, en réponse à des signaux de commande de cellules identiques mais décalés dans de temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n de cellules, soit 2π/n, ce qui est optimal en ce qui concerne les harmoniques engendrées sur la sortie et permet un équilibrage naturel des tensions de charge des condensateurs du convertisseur. Un autre décalage est cependant concevable.

Dans un tel convertisseur, les condensateurs successifs C1, C2..., Cn ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n = 3, c'est-à-dire lorsque le convertisseur a trois cellules seulement.

Bien entendu, ce qui précède s'applique pour d'autres valeurs de n, du moment qu'il y en a deux au moins.

Dans ce qui suit on dénommera convertisseur multiniveaux un convertisseur répondant à la description qui précède.

L'objet de la présente invention est de faire en sorte que, dans un tel convertisseur multiniveaux, la charge de chaque condensateur reste conforme à ce qui vient d'être indiqué, malgré les inévitables déviations par rapport aux conditions nominales de fonctionnement.

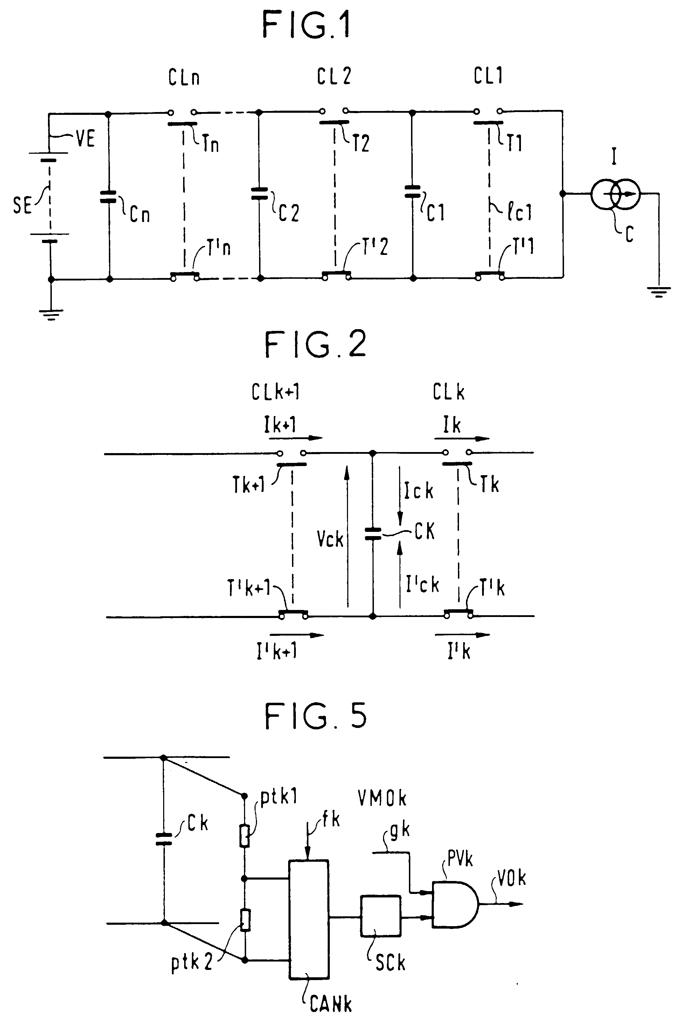

Pour examiner plus facilement comment doit nominalement évoluer la charge d'un des condensateurs d'un convertisseur multiniveaux conforme à ce qui précède, on se référera à la figure 2 qui représente une cellule de commutation quelconque CLk, avec ses interrupteurs Tk, T'k, le condensateur Ck associé à cette cellule, ainsi que la cellule suivante CLk+1, avec ses interrupteurs Tk+1, T'k+1.

Compte tenu du couplage entre les interrupteurs de chaque cellule, Tk, T'k ; Tk+1, T'k+1, l'ensemble de deux cellules imbriquées Tk-Tk+1 représenté à la figure 2 possède quatre états :
a) un premier état où, Tk et Tk+1 étant bloqués, la tension de charge de Ck n'évolue pas ;
b) un deuxième état où, Tk et Tk+1 étant conducteurs, la tension de charge de Ck n'évolue pas non plus, parce qu'alors T'k et T'k+1 sont bloqués ;
c) un troisième état où, Tk étant conducteur et Tk+1 bloqué, la source de courant C impose un courant Ik égal à I à travers Tk, alors que le courant I'k vers T'k est nul. L'état de Tk+1 impose un courant Ik+1 nul, alors que le courant I'k+1 est égal à I, tandis que le courant I'ck dans le condensateur Ck est égal à I ;
d) un quatrième état où, Tk étant bloqué et Tk+1 conducteur, la source de courant C impose un courant I'k+1 égal à I à travers T'k, alors que le courant Ik à travers Tk est nul. L'état de Tk+1 impose un courant Ik+1 égal à I, alors que le courant I'k+1 est nul, tandis que le courant Ick dans le condensateur Ck est égal à I.

Les courants I'ck = I'k+1 et Ick = Ik+1 apportent au condensateur Ck des charges additionnelles opposées, dans les troisième et quatrième états ci-dessus ; on dira que les premières sont négatives et les secondes positives. Les courants correspondant à ces deux états sont imposés par la source de courant. Si la source de courant est rigoureusement continue, toutes choses égales par ailleurs, les courants imposés par la source de courant dans les phases c) et d) sont les mêmes et de sens opposés, à tout instant, au long des intervalles de conduction de Tk et Tk+1 (nominalement égaux et décalés dans le temps, comme indiqué plus haut). Cela entraîne que la charge de Ck, modifiée négativement puis positivement de quantités égales, ne varie pas au cours d'une période de convertisseur.

Les courants Ick et I'ck sont déterminés par la tension de la source de tension, le courant dans la source de courant et la tension de charge Vck du condensateur Ck. De manière plus générale, lorsque l'impédance de la source de courant n'est pas infinie, le courant de la source de courant dépend de la tension à ses bornes et donc des tensions Vck des condensateurs. S'il advient que la tension de charge Vck soit, par exemple, trop élevée, par rapport à sa valeur nominale VE.k/n, quelle qu'en soit la raison, il en résultera un courant de décharge I'ck tendant à être plus fort et un courant de charge Ick tendant à être plus faible que ce qu'ils seraient nominalement, ce qui tendra à ramener la charge du condensateur Ck à ce qu'elle devrait être. Ceci explique que le fonctionnement du convertisseur multiniveaux soit stable et permette des variations d'amplitude, dans les deux sens, tant du côté de la source de tension que du côté de la source de courant. On verra par la suite que cela soulève néanmoins des problèmes en termes de dynamique.

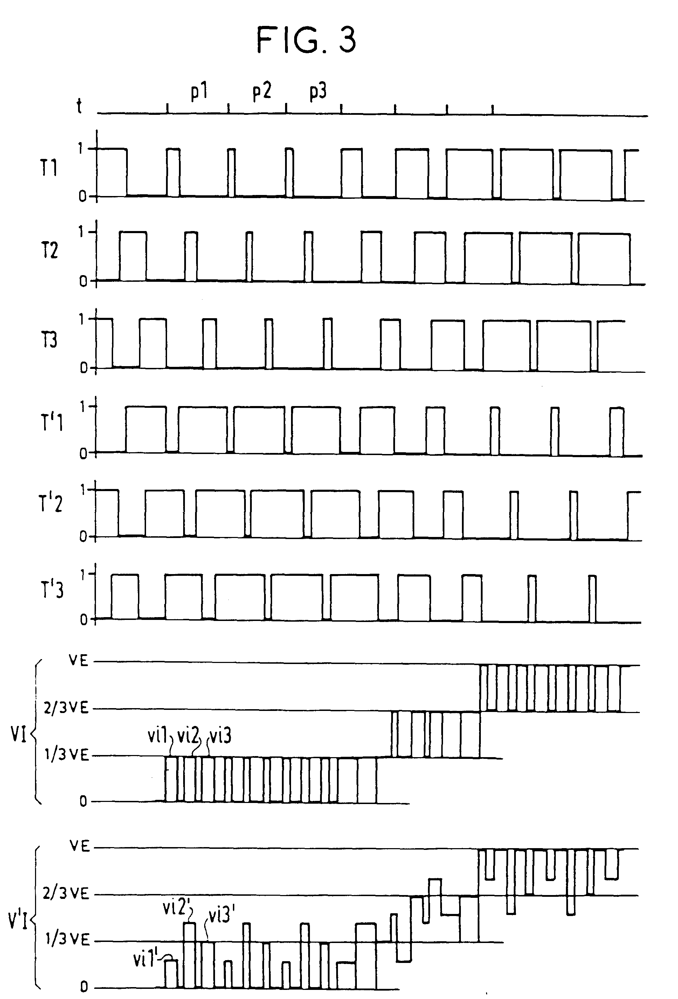

La figure 3 donne un exemple de fonctionnement du convertisseur multiniveaux conforme aux figures 1 et 2, dans le cas où n = 3 ; on y applique une commande du type de la modulation PWM, en vue de la fourniture à la source de courant C d'une tension alternative modulée sinusoïdalement, c'est-à-dire que, durant des périodes successives p1, p2, p3... de fonctionnement du convertisseur (ligne t), les interrupteurs T1, T2, T3 sont successivement conducteurs pendant des intervalles de durée variant selon une onde de modulation de la tension de sortie, dite ci-après modulante. Les interrupteurs correspondants T'1, T'2, T'3 sont à chaque instant dans la position opposée.

Bien entendu d'autres modes de modulation du fonctionnement des interrupteurs permettent, comme il est bien connu, d'obtenir le même résultat. Bien entendu encore, le convertisseur peut tout aussi bien servir à fournir à la source de courant C toute autre forme d'onde ou une tension continue régulée.

On considérera d'abord une période p1 de fonctionnement du convertisseur. Au cours de celle-ci, lorsque l'un des interrupteurs T1, T2, T3 est conducteur, les deux autres sont bloqués ; pour chaque ensemble de deux cellules et le condensateur compris entre elles, cela correspond aux états c) et d) décrits plus haut, dans lesquels le condensateur reçoit successivement des charges additionnelles négatives et des charges additionnelles positives, dont la valeur totale est nominalement nulle. On remarquera de plus que, lorsque les cellules imbriquées CL1-CL2 sont dans l'état d), les cellules imbriquées CL2-CL3 sont dans l'état c), de sorte que le condensateur C1 reçoit des charges additionnelles positives par le même courant qui fournit des charges additionnelles négatives au condensateur C2.

La figure 3 illustre additionnellement et à titre d'exemple le fonctionnement du convertisseur multiniveaux dans des périodes p2, p3, etc...,au cours desquelles les durées de conduction des interrupteurs T1, T2, T3 se raccourcissent, puis s'allongent jusqu'à dépasser 1/3 de période, se recouvrant alors. La ligne VI représente ce que serait idéalement la tension transmise à la source de courant, notamment si les condensateurs avaient une capacité telle que les charges additionnelles considérées ne modifiaient sensiblement pas la tension à leurs bornes. La tension VI est exprimée en fractions de la tension VE de la source de tension SE, en prenant comme référence de tension le pôle négatif de la source de tension SE. On voit que cette tension VI contient, d'une part, un fondamental important à la fréquence de la modulante et, d'autre part, des harmoniques d'amplitudes plus faibles à des fréquences supérieures à la fréquence de découpage, qui peuvent être facilement éliminées par un filtre passe-bas.

Ce courant variant sinusoïdalement, les états c) et d) envisagés plus haut n'apporteront pas des charges additionnelles égales aux condensateurs du convertisseur, puisqu'entre ces deux états, le courant aura eu le temps de varier. Cette variation ne sera négligeable que si la période de fonctionnement des interrupteurs est nettement supérieure à la fréquence de la modulante.

Par ailleurs, il faut s'attendre à ce que le courant alternatif fourni à la source de courant ne soit pas strictement sinusoïdal, mais distordu de façon asymétrique. De même, des écarts de niveaux dans les signaux de commande ou dans les signaux les engendrant, ou encore les différences de temps de commutation entre les divers interrupteurs traversés, rendront inévitablement inégales les durées de conduction des interrupteurs sur une période de fonctionnement du convertisseur, ou décaleront dans le temps les phases de conduction des interrupteurs, ou encore déséquilibreront les courants de charge et de décharge des condensateurs. D'une manière générale, par conséquent, on ne peut garantir en pratique, dans un convertisseur multiniveaux du type décrit, le respect des conditions nominales de fonctionnement, telles qu'elles ont été initialement décrites. Or, un écart de charge additionnelle persistant conduit à un écart dans un sens ou dans l'autre de la charge d'un condensateur, donc de sa tension de charge moyenne, donc aussi à une distorsion, à la fréquence de fonctionnement du convertisseur, de la tension fournie à la source de courant.

Cet effet est illustré par le tracé VI' de la figure 3, qui est semblable au tracé VI, à cela près que, le condensateur C1 (figure 1) étant supposé chargé sous une tension plus faible que sa tension de charge nominale, au lieu de fournir des impulsions vi1, vi2, vi3 d'amplitude constante, le convertisseur fournit des impulsions telles que vil' d'amplitude réduite (l'échelle est exagérée pour une meilleure lisibilité), lorsque le condensateur C1 fournit à la source de courant C sa propre tension de charge, et des impulsions telles que vi2' d'amplitude accrue, lorsque le condensateur C1 soustrait sa propre de tension de celle qui est fournie à la source de courant C, ainsi que des impulsions telles que vi3' d'amplitude inchangée, lorsque le condensateur C1 est hors circuit. On voit aisément que, dans le signal VI', cela apporte une composante perturbatrice à ladite fréquence de convertisseur.

Une telle composante perturbatrice n'existe pas quand les condensateurs sont chargés à leurs tensions nominales respectives. Lorsqu'elle apparaît, elle est généralement nuisible.

Mais, surtout, les tensions auxquelles sont soumis les interrupteurs ne seront alors plus sensiblement égales à la différence des tensions de charge nominales de deux condensateurs adjacents, c'est-à-dire à la valeur de la tension de la source de tension divisée par le nombre d'étages du convertisseur. Cela peut mettre en danger ces interrupteurs.

Bien entendu, comme mentionné précédemment, les écarts de charge des condensateurs tendent spontanément à se résorber, mais ce processus prend du temps.

Par ailleurs, ce processus spontané est mis en oeuvre via la source de courant. Il ne peut donc opérer lorsque la source de courant n'impose pas de courant et, en tout cas, sera ralenti lorsque le courant de la source de courant est réduit.

La présente invention, à partir de ces constatations, propose un convertisseur multiniveaux dans lequel est mieux assuré le maintien de la charge moyenne de chacun des condensateurs du convertisseur à sa valeur nominale.

Selon l'invention, ce résultat est atteint en ce que le convertisseur multiniveaux comprend additionnellement des moyens d'évaluation de la tension moyenne aux bornes de chacun des condensateurs, des moyens pour constater, pour chacun desdits condensateurs, un écart éventuel entre la tension de charge moyenne évaluée et la tension de charge moyenne nominale de ce condensateur et fournir des signaux d'écart correspondant, ainsi que des moyens de commande de correction, recevant lesdits signaux d'écart et commandant en conséquence au moins un couplage temporaire entre deux condensateurs, afin de neutraliser ledit écart.

Dans une forme de réalisation, lesdits moyens de commande de correction comprennent un dispositif de correction par condensateur considéré du convertisseur, recevant chacun un dit signal d'écart, ainsi qu'un signal de validation d'une base de temps, pour fournir en réponse l'un de deux signaux de commande de transfert de charge, destinés à commander la connexion dudit condensateur considéré, l'un à un circuit amont pour le décharger, l'autre à un circuit aval, pour le recharger.

Ledit circuit amont comprend le condensateur de rang immédiatement inférieur, s'il y en a un.

Ledit circuit aval comprend le condensateur de rang immédiatement supérieur, s'il y en a un.

De préférence, la présence d'un desdits signaux d'écart provoque un cycle de correction dans lequel ladite base de temps valide successivement lesdits dispositifs de correction.

Avantageusement, lesdits écarts ne donnent lieu à signal d'écart que s'ils dépassent un seuil prédéterminé.

Dans une forme de réalisation, l'amplitude d'un dit signal d'écart caractérise l'ampleur de l'écart et détermine la durée dudit signal de correction.

Selon une variante, ledit signal de correction a une durée fixe prédéterminée, correspondant à un incrément de correction.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :
- la figure 1, déjà décrite, le schéma de principe d'un convertisseur multiniveaux connu
- la figure 2, déjà décrite, le schéma de principe d'un ensemble de deux étages imbriqués du convertisseur multiniveaux de la figure 1,
- la figure 3, déjà décrite, des formes d'ondes décrivant le fonctionnement du convertisseur multiniveaux des figures 1 et 2, dans le cas où il comprend trois étages,
- la figure 4, le schéma de principe de moyens de commande d'un convertisseur multiniveaux du type des figures 1, 2 et 3, agencés pour permettre la mise en oeuvre de l'invention,
- la figure 5, le schéma de principe de moyens d'évaluation de tension de charge de condensateur utilisables dans le dispositif de la figure 4,

On ne reviendra pas sur la description d'un convertisseur multiniveaux. Les schémas des figures 1, 2 et 3 correspondent à un convertisseur du type décrit dans le document de brevet FR - 2 697 715 A1 auquel le lecteur est renvoyé pour de plus amples détails.

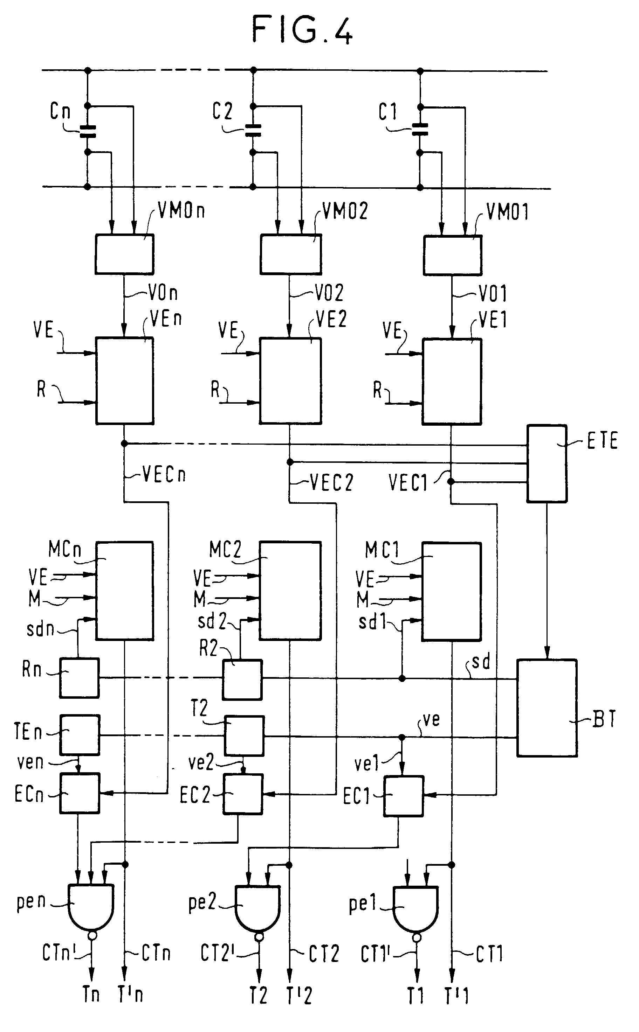

La figure 4 ne représente du convertisseur de la figure 1, que les condensateurs C1, C2..., Cn.

A chacun de ces condensateurs est associé, selon l'invention, un dispositif d'évaluation VMO1, VMO2..., VMOn permettant d'évaluer la tension de charge moyenne de chacun des condensateurs. A cette fin, ce dispositif est couplé aux deux bornes du condensateur. Il fournit un signal d'évaluation VO1, VO2..., VOn exprimant la tension de charge moyenne existant aux bornes du condensateur.

En se reportant à la figure 5, ce dispositif d'évaluation sera composé, selon une forme de mise en oeuvre, d'impédances ptk1 et ptk2, connectées en série entre les bornes du condensateur Ck, et fournissant une fraction déterminée de la tension aux bornes de ce condensateur à un convertisseur analogique-numérique CAN fournissant à chaque impulsion fkn une valeur numérique de tension à un circuit de calcul de moyenne SCk, lequel est lu une fois par cycle du convertisseur, par un circuit de porte PVk déclenché par un signal gk. Les signaux fk et gk seront avantageusement produits par une base de temps BT (figure 4) et leur position dans la période de fonctionnement du convertisseur sera telle que, après m mesures de tension dans la période de fonctionnement du convertisseur et calcul de la moyenne des résultats de cette mesure, la valeur de la tension de charge moyenne observée soit disponible sur la sortie VOk du circuit SCk, une fois par période de fonctionnement du convertisseur, au moment opportun pour déterminer, les écarts éventuels de charge des condensateurs, comme on verra plus loin.

A chacun des condensateurs est également associé, selon l'invention, un dispositif de constatation d'écart VE1, VE2..., VEn permettant de constater un écart éventuel entre la tension de charge moyenne observée, qu'il reçoit du dispositif d'évaluation correspondant, et la tension de charge moyenne nominale de ce condensateur. Ce dispositif de constatation d'écart calcule lui-même la tension de charge moyenne nominale de ce condensateur, qui est la fraction l/n, n étant le nombre d'étages du convertisseur, de la tension VE de la source de tension SE, multipliée par le rang R de l'étage. Ce dispositif reçoit donc les valeurs VE et R, la valeur n, constante de l'ensemble du convertisseur étant câblée dans chaque dispositif (la valeur R, constante de chaque étage, pourrait d'ailleurs être également câblée). Il en dérive la tension de charge moyenne nominale VE.R/n et la compare à la tension de charge moyenne évaluée pour fournir un signal d'écart VEC1, VEC2..., VECn, caractérisant la différence entre ces deux tensions. Mais, selon une variante, le signal d'écart peut être un simple signal logique (à deux bits) caractérisant la présence d'un écart et son signe. Avantageusement, pour des raisons qui apparaîtront plus loin, un signal d'écart n'est fourni que si l'écart de charge du condensateur dépasse un seuil prédéterminé, câblé dans le dispositif de constatation d'écart.

Les moyens de commande de la figure 4 comprennent en outre des modules de commande MC1, MC2..., MCn. Ces modules de commande fonctionnent en réponse à un signal sd produit à chaque période telle que p1 (figure 3) par une base de temps BT et dont sont dérivés des signaux de déclenchement sd1, sd2..., sdn décalés entre eux chacun d'une fraction de période grâce au unités de retard R2..., Rn, pour la commande décalée des cellules de commutation du convertisseur. La fonction essentielle des modules de commande MC1, MC2..., MCn est de produire, au cours de chaque période, une impulsion de commande portant le signal CT1, CT2..., CTn au niveau actif, dont la durée nominale est déterminée par la valeur VE de la tension fournie par la source de tension et par celle M du signal de modulation.

Ces impulsions de commande au niveau actif sont adressées chacune directement aux interrupteurs T'1, T'2..., T'n, pour les bloquer, et sont fournies aux portes NOR pe1, pe2..., pen, lesquelles, quels que soient les niveaux de leurs autres entrées, fournissent alors chacune le niveau opposé, dit inactif, pour rendre conducteurs alors les interrupteurs T1, T2..., Tn. La position de ces interrupteurs est illustrée (O = bloqué, 1 = conducteur), sous ces références, à la figure 3.

Les signaux d'écart sont destinés à agir sur des moyens de commande de correction comprenant la base de temps BT, et des dispositifs de correction EC1, EC2..., ECn, chacun propre à un condensateur du convertisseur, ces dispositifs recevant lesdits signaux d'écart et commandant en conséquence au moins un couplage temporaire entre deux condensateurs, afin de neutraliser ledit écart.

En l'occurrence, ces dispositifs reçoivent chacun un signal d'écart VEC1, VEC2..., VECn, ainsi qu'un signal de validation ve de la base de temps BT, pour fournir en réponse l'un de deux signaux de commande de transfert de charge CR1, CR1', CR2, CR2'..., CRn, CRn', destinés l'un à commander la connexion dudit condensateur considéré C1, C2..., Cn à un circuit amont pour le décharger, l'autre à un circuit aval, pour le recharger.

Si l'on prend l'exemple du condensateur C1, le dispositif de correction correspondant EC1, lorsqu'il est validé (on verra plus loin comment), et s'il reçoit un signal d'écart (caractérisant un écart dépassant un seuil prédéterminé), fournit le signal de commande de transfert de charge CR1, si le condensateur est trop chargé, ou le signal de commande de transfert de charge CRl', s'il est insuffisamment chargé.

En considérant d'abord le cas où le condensateur C1 est trop chargé, le signal CR1 au niveau actif passe la sortie de la porte pel au niveau inactif et de ce fait rend conducteur l'interrupteur T1. On voit qu'ainsi (figure 1), puisque l'interrupteur T'1 est également conducteur (parce que le signal CT1 est inactif, notamment par suite de l'absence de tout signal sd), le condensateur C1 est mis en court-circuit à travers les interrupteurs T1 et T'1. Ce court-circuit, comprenant des éléments de câblage est inévitablement inductif, de sorte, le signal de commande de transfert de charge CR1 étant très court (quelques microsecondes), il ne produit qu'une réduction calibrée de la charge du condensateur. On peut prévoir que sa durée soit en rapport avec l'amplitude du signal d'écart, lorsque celle-ci indique l'ampleur de l'écart. Il y a alors lieu de prendre en considération le courant I dans la source de courant, qui ajoute à la décharge du condensateur C1. Mais on peut aussi, dans une variante plus simple à mettre en oeuvre, prévoir que sa durée soit constante et courte, l'ajustement de la charge du condensateur s'effectuant alors en plusieurs étapes. Ces étapes seront, dans ce cas, suffisamment petites pour que, après une dernière correction, l'écart de charge subsistant soit inférieur audit seuil prédéterminé.

Si l'on considère maintenant, à la place du condensateur C1, le condensateur C2, le fonctionnement est le même, le signal de commande de transfert de charge connectant directement le condensateur C2 au condensateur C1, par les interrupteurs T2 et T'2. La différence entre les tensions de charge des deux condensateurs est égale à la charge du condensateur C1. On est donc au départ, en présence d'un court-circuit mettant en jeu les mêmes grandeurs physiques. Toutefois, la charge retirée au condensateur C2 est alors transférée dans le condensateur C1, ce qui élève la tension à ses bornes et limite en conséquence le transfert de charge de C2 à C1. La durée du transfert de charge doit donc être augmentée (à peu près doublée, en considérant que l'excursion de tension est faible devant la tension de charge des condensateurs). Par ailleurs, la charge transférée dans le condensateur C1 devient excédentaire dans ce dernier ; elle donnera donc lieu à la constatation d'un écart de tension de charge et sera par conséquent corrigée, comme on l'a décrit auparavant. Le courant I de la source de courant intervient par ailleurs, comme il est indiqué précédemment. Il en va de même pour tous les étages du convertisseur.

En considérant ensuite le cas où le condensateur C1 est insuffisamment chargé, le signal CR'1 agit sur la porte pe2 qui fournit le niveau inactif et rend conducteur en conséquence l'interrupteur T2. Le signal de commande de transfert de charge CR1' connecte ainsi directement le condensateur C1 au condensateur C2, de sorte qu'il se produit un transfert de charge du condensateur C2 dans le condensateur C1, comme décrit précédemment. La correction de charge du condensateur C1 entraîne cependant aussi un écart de charge pour le condensateur C2, lequel sera corrigé plus tard de la façon que l'on vient de décrire, et ainsi de suite.

On a représenté un circuit ECn, mais, puisqu'il n'y a pas d'interrupteurs Tn+1, Tn+1', il est dépourvu de sortie CRn'.

Pour organiser le fonctionnement des dispositifs de correction, il est prévu, dans l'exemple de réalisation de la figure 4, que la présence de l'un au moins desdits signaux d'écart VEC1, VEC2..., VECn, décelée par un circuit ETE, de type OU, agit sur la base de temps BT, dans laquelle elle provoque un cycle de correction, s'intercalant entre deux périodes de convertisseur ; au cours de ce cycle de correction, la base de temps BT produit un signal ve, lequel fournit directement le signal vel validant le dispositif de correction EC1, puis, par les circuits à retard en cascade T2..., Tn, les signaux ve2..., ven validant successivement les autres dispositifs de correction (EC2..., ECn).

Ainsi, la détection d'un écart, généralement unique, donne lieu à un cycle de correction. S'il a causé un écart dans un condensateur voisin du convertisseur, un autre cycle a lieu ensuite ; on peut avantageusement prévoir un intervalle minimal entre ces cycles en agençant la base de temps de façon appropriée. Le décalage dans le temps des opérations de correction relatives aux condensateurs successifs du convertisseur fait que plusieurs écarts constatés en même temps peuvent être corrigés dans un même cycle.

Il est bien évident que les descriptions qui précèdent n'ont été données qu'à titre d'exemple non limitatif et que les valeurs numériques, notamment, peuvent changer avec chaque application. L'invention s'étend par ailleurs à une installation d'alimentation faisant usage d'un convertisseur multiniveaux conforme à la présente description. De même, on a traité le cas d'une source de tension positive, par rapport à une tension de référence, la masse, avec la charge des condensateurs polarisée dans le même sens, tandis que le courant s'écoule du pôle positif de la source de tension vers la source de courant. Il est clair également, que l'homme de métier saura adapter l'invention dans les cas où les polarités sont différentes.

## Revendications

1. Convertisseur multiniveaux comprenant notamment, entre une source de tension (SE) et une source de courant (C), une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, connecté entre les deux pôles de la paire de pôles aval de la cellule, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à un signal de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse à des signaux de commande de cellules identiques mais décalés dans de temps d'une fraction de ladite période, les interrupteurs des cellules successives aient respectivement le même fonctionnement, mais décalé dans le temps de ladite fraction de période, les condensateurs successifs (C1, C2..., Cn) ayant nominalement des tensions de charge moyennes respectivement croissantes, la tension de charge moyenne nominale du condensateur de chacune desdites cellules étant égale au produit d'une tension (VE) issue de ladite source de tension (SE), par l'inverse du nombre de cellules et par le rang de la cellule, caractérisé en ce qu'il comprend des moyens d'évaluation (VMO1, VMO2..., VMOn) de la tension moyenne aux bornes de chacun des condensateurs (C1, C2..., Cn), des moyens (VE1, VE2..., VEn) pour constater, pour chacun desdits condensateurs (C1, C2..., Cn), un écart éventuel entre la tension de charge moyenne évaluée et la tension de charge moyenne nominale de ce condensateur et fournir des signaux d'écart correspondant (VEC1, VEC2..., VECn), ainsi que des moyens de commande de correction (BT, EC1, EC2..., ECn), recevant lesdits signaux d'écart et commandant en conséquence au moins un couplage temporaire entre deux condensateurs, afin de neutraliser ledit écart.

2. Convertisseur multiniveaux conforme à la revendication 1, caractérisé en ce que lesdits moyens de commande de correction comprennent un dispositif de correction (EC1, EC2..., ECn) par condensateur considéré du convertisseur, recevant chacun un dit signal d'écart (VEC1, VEC2..., VECn), ainsi qu'un signal de validation d'une base de temps (BT), pour fournir en réponse l'un de deux signaux de commande de transfert de charge (CR1, CR1', CR2, CR2'..., CRn, CRn'), destinés à commander la connexion dudit condensateur considéré (C1, C2..., Cn), l'un à un circuit amont pour le décharger, l'autre à un circuit aval, pour le recharger.

3. Convertisseur multiniveaux conforme à la revendication 2, caractérisé en ce que ledit circuit amont comprend le condensateur de rang immédiatement inférieur, s'il y en a un.

4. Convertisseur multiniveaux conforme à la revendication 2, caractérisé en ce que ledit circuit aval comprend le condensateur de rang immédiatement supérieur, s'il y en a un.

5. Convertisseur multiniveaux conforme à l'une quelconque des revendications qui précèdent, caractérisé en ce que la présence de l'un au moins desdits signaux d'écart provoque un cycle de correction dans lequel ladite base de temps valide successivement lesdits dispositif de correction (EC1, EC2..., ECn).

6. Convertisseur multiniveaux conforme à l'une quelconque des revendications qui précèdent, caractérisé en ce que lesdits écarts ne donnent lieu à signal d'écart que s'ils dépassent un seuil prédéterminé.

7. Convertisseur multiniveaux conforme à l'une quelconque des revendications qui précèdent, caractérisé en ce que l'amplitude d'un dit signal d'écart caractérise l'ampleur de l'écart et détermine la durée dudit signal de correction.

8. Convertisseur multiniveaux conforme à l'une quelconque des revendications 1 à 6, caractérisé en ce que ledit signal de correction a une durée fixe prédéterminée, correspondant à un incrément de correction.

9. Installation d'alimentation incorporant un convertisseur multiniveaux conforme à l'une quelconque des revendications précédentes.

## Patentansprüche

1. Multiniveau-Umwandler, der insbesondere zwischen einer Spannungsquelle (SE) und einer Stromquelle (C) eine Folge von steuerbaren Schaltzellen (CL1, CL2 ..., CLn) umfaßt, deren jede zwei Unterbrecher (T1, T'1; T2, T'2 ...; Tn, T'n) hat, wobei ein Pol jedes der zwei Unterbrecher ein Paar von aufwärtsseitigen Polen und der andere Pol jedes der Unterbrecher ein Paar von abwärtsseitigen Polen bildet, wobei das Paar von abwärtsseitigen Polen einer aufwärtsseitigen Zelle mit dem Paar von aufwärtsseitigen Polen einer abwärtsseitigen Zelle und das Paar von aufwärtsseitigen Polen einer ersten Zelle (CL1) mit der Stromquelle (C) verbunden ist, wohingegen das Paar von abwärtsseitigen Polen einer letzten Zelle (CLn) mit der Spannungsquelle (SE) verbunden ist, wobei dieser Umwandler ferner noch einen Kondensator (C1, C2 ..., Cn) für jede Zelle ausgenommen denjenigen der letzten, der fortgelassen werden kann, wenn die Spannungsquelle (SE) geeignet ist, dessen Rolle zu spielen, der zwischen den zwei Polen des Paares von aufwärtsseitigen Polen der Zelle angeschlossen ist, sowie Steuermittel umfaßt, die die nominelle Funktion des Umwandlers lenken durch Einwirken auf die Unterbrecher der aufeinanderfolgenden Zellen derart, daß die zwei Unterbrecher einer gleichen Zelle immer in jeweils entgegengesetzten Leitfähigkeiszuständen sind, so daß in Reaktion auf ein von den Steuermitteln geliefertes Zellensteuersignal (CT1, CT2 ..., CTn) der eine der zwei Unterbrecher einer gleichen Zelle nacheinander in einem ersten Leitfähigkeitszustand und dann in einem zweiten Leitfähigkeitszustand während einer zyklisch wiederholten Periode ist, und so daß in Reaktion auf identische, aber um einen Bruchteil der Periode zeitlich versetzte Zellensteuersignale die Unterbrecher der aufeinanderfolgenden Zellen jeweils die gleiche, allerdings um den Periodenbruchteil zeitversetzte Funkticn haben, wobei die aufeinanderfolgenden Kondensatoren (C1, C2 ..., Cn) nominell jeweils zunehmende mittlere Ladespannungen haben, wobei die nominelle mittlere Ladespannung des Kondensators jeder der Zellen gleich dem Produkt einer von der Spannungsquelle (SE) ausgegebenen Spannung (VE) mit dem Kehrwert der Zahl der Zellen und mit dem Rang der Zelle ist,
dadurch gekennzeichnet, daß er Mittel zum Abschätzen (VMO1, VMO2 ..., VMOn) der mittleren Spannung an den Klemmen jedes der Kondensatoren (C1, C2 Cn), Mittel (VE1, VE2 ..., VEn) zum Feststellen, für jeden der Kondensatoren (C1, C2 ..., Cn), einer eventuellen Abweichung zwischen der abgeschätzten mittleren Ladespannung und der nominellen mittleren Ladespannung dieses Kondensators und zum Liefern von entsprechenden Abweichungssignalen (VEC1, VEC2 ..., VECn) sowie Korrektursteuermittel (BT, EC1, EC2 ..., ECn) umfaßt, die die Abweichungssignale empfangen und infolgedessen wenigstens eine zeitweilige Kopplung zwischen zwei Kondensatoren steuern, um die Abweichung auszugleichen.

2. Multiniveau-Umwandler nach Anspruch 1, dadurch gekennzeichnet, daß die Korrektursteuermittel eine Korrekturvorrichtung (EC1, EC2 ..., ECn) pro berücksichtigtem Kondensator des Umwandlers umfassen, von denen jede ein besagtes Abweichungssignal (VEC1, VEC2 ..., VECn) sowie ein Validierungssignal einer Zeitbasis (BT) empfängt, um in Reaktion eines von zwei Ladungsübertragungssteuersignalen (CR1, CR1', CR2, CR2 ..., CRn, CRn') zu liefern, die bestimmt sind, - das eine - die Verbindung des betreffenden Kondensators mit einer aufwärtsseitigen Schaltung, um ihn zu entladen, bzw. - das andere - mit einer abwärtsseitigen Schaltung, um ihn zu laden, zu steuern.

3. Multiniveau-Umwandler nach Anspruch 2, dadurch gekennzeichnet, daß die aufwärtsseitige Schaltung den Kondensator mit nächsthöherem Rang umfaßt, sofern er vorhanden ist.

4. Multiniveau-Umwandler nach Anspruch 2, dadurch gekennzeichnet, daß die abwärtsseitige Schaltung den Kondensator mit nächstniedrigerem Rang umfaßt, sofern er vorhanden ist.

5. Multiniveau-Umwandler nach einem beliebigen der vorhergehenden Ansprüche, dadurch gekennzeichnet, daß das Vorhandensein wenigstens eines der Abweichungssignale einen Korrekturzyklus hervorruft, in dem die Zeitbasis nacheinander die Korrekturvorrichtungen (EC1, EC2 ..., ECn) validiert.

6. Multiniveau-Umwandler nach einem beliebigen der vorhergehenden Ansprüche, dadurch gekennzeichnet, daß die Abweichungen das Abweichungssignal nur hervorrufen, wenn sie eine vorgegebene Schwelle überschreiten.

7. Multiniveau-Umwandler nach einem beliebigen der vorhergehenden Ansprüche, dadurch gekennzeichnet, daß die Amplitude eines besagten Abweichungssignals die Stärke der Abweichung kennzeichnet und die Dauer des Korrektursignales festlegt.

8. Multiniveau-Umwandler nach einem beliebigen der Ansprüche 1 bis 6, dadurch gekennzeichnet, daß das Korrektursignal eine vorgegebene feste Dauer entsprechend einem Korrekturinkrement hat.

9. Leistungsversorgungsanlage mit einem Multiniveau-Umwandler nach einem beliebigen der vorhergehenden Ansprüche.

## Claims

1. A multilevel converter comprising, in particular, between a voltage source (SE) and a current source (C), a succession of controllable switching cells (CL1, CL2 ..., CLn), each having two switches (T1, T'1; T2, T'2; ...; Tn, T'n), with one pole of each of the two switches forming part of a pair of upstream poles and with the other pole of each of the switches forming one of a pair of downstream poles, the pair of downstream poles of an upstream cell being connected to the pair of upstream poles of a downstream cell, and the pair of upstream poles of a first cell (CL1) being connected to said current source (C) while the pair of downstream poles of a last cell (CLn) is connected to said voltage source (SE), the converter further comprising a capacitor (C1, C2 ..., Cn) for each cell, except that the capacitor of the last cell may be omitted when said voltage source (SE) is suitable for performing the same role, each capacitor being connected between the two poles constituting the pair of downstream poles of the corresponding cell, the converter also comprising control means governing the nominal operation of the converter by acting on the switches of successive cells in such a manner that the two switches of any given cell are always in respective opposite conduction states, such that in response to a cell control signal (CT1, CT2 ..., CTn) provided by said control means, one of the two switches in a given cell is successively in a first conduction state and then in a second conduction state during a cyclically repeated period, and such that in response to cell control signals that are identical but offset in time by a fraction of said period the switches of successive cells operate respectively in the same manner but offset in time by said fraction of a period, the successive capacitors (C1, C2 ..., Cn) having respective increasing nominal mean charge voltages, the nominal mean charge voltage of the capacitor in each of said cells being equal to the product of a voltage (VE) from said voltage source (SE) multiplied by the reciprocal of the number of cells and by the rank of the cell, the converter being characterized in that it comprises means (VMO1, VMO2, ..., VMOn) for evaluating the mean voltage across the terminals of each capacitor (C1, C2 ..., Cn), means (VE1, VE2 ..., VEn) for measuring any difference on each of said capacitors (C1, C2 ..., Cn) between the evaluated mean charge voltage and the nominal mean charge voltage of the capacitor, and for delivering corresponding difference signals (VEC1, VEC2 ..., VECn), and correction controlling means (BT, EC1, EC2 ..., ECn) receiving said difference signals and consequently controlling at least one temporary coupling between two capacitors in order to correct said difference.

2. A multilevel converter according to claim 1, characterized in that said correction control means comprise one correction circuit (EC1, EC2 ..., ECn) per capacitor under consideration in the converter, each of said circuits receiving one of said difference signals (VEC1, VEC2 ..., VECn), together with an enabling signal from a time base (BT), and responding thereto by delivering one of two charge transfer controlling signals (CR1, CR1'; CR2, CR2'; ...; CRn, CRn') for controlling connection of said capacitor under consideration (C1, C2, ..., Cn) respectively to an upstream circuit for discharging it and to a downstream circuit for recharging it.

3. A multilevel converter according to claim 2, characterized in that said upstream circuit includes the capacitor of immediately lower rank, if there is one.

4. A multilevel converter according to claim 2, characterized in that said downstream circuit includes the capacitor of immediately higher rank, if there is one.

5. A multilevel converter according to any preceding claim, characterized in that the presence of at least one of said difference signals causes a correction cycle to take place in which said time base enables said correction circuits (EC1, EC2 ..., ECn) in succession.

6. A multilevel converter according to any preceding claim, characterized in that said differences give rise to a difference signal only if they exceed a predetermined threshold.

7. A multilevel converter according to any preceding claim, characterized in that the amplitude of one of said difference signals characterizes the magnitude of the difference and determines the duration of said correction signal.

8. A multilevel converter according to any one of claims 1 to 6, characterized in that said correction signal is of predetermined fixed duration corresponding to a correction increment.

9. A power supply installation incorporating a multilevel converter according to any preceding claim.
